# EUROPEAN PATENT APPLICATION

(11) **EP 2 388 509 A1**
(43) Date of publication of application: **23.11.2011**
(21) Application number: 09841529.2
(22) Date of filing: 15.12.2009
(51) Int. Cl.: F21S 2/00, F21V 23/00, F21V 23/06, G02F 1/13357, G09F 9/00, F21Y 103/00

(54) **LIGHTING DEVICE, DISPLAY DEVICE, AND TELEVISION RECEIVING DEVICE**

(30) Priority: 13.03.2009 JP 2009061272
(71) Applicant: Sharp Kabushiki Kaisha, Osaka-shi, Osaka 545-8522 (JP)
(72) Inventor: MATSUMOTO, Shinji, Osaka-shi, Osaka 545-8522 (JP)
(74) Representative: Müller-Boré & Partner Patentanwälte
(86) International application number: PCT/JP2009/070868
(87) International publication number: WO 2010/103704

(57) **Abstract**

a lighting device 12 according to the present invention includes: a plurality of light sources 18; a chassis 14 housing the light sources 18, the chassis 14 having a guide 30, 31; a power supply board 20 configured to supply drive power to the light sources 18; and a plurality of relay connectors 21 mounted to the chassis 14 and configured to relay power supply between the power supply board 20 and the light sources 18. The relay connectors 21 are arranged in a row. The power supply board 20 is disposed such that a long-side direction thereof is aligned with a direction along the row of the relay connectors 21. The power supply board 20 is moved in the direction along the row of the relay connectors 21 so as to be connected to the relay connectors 21. The guide 30, 31 is configured to guide the power supply board 20 in the direction along the row of the relay connectors 21.

## Description

### TECHNICAL FIELD

The present invention relates to a lighting device, a display device and a television receiver.

### BACKGROUND ART

A liquid crystal panel included in a liquid crystal display device such as a liquid crystal television receiver does not emit light. Therefore, a backlight unit that is required as a separate lighting unit. The backlight unit is arranged behind the liquid crystal panel (on an opposite side from the display surface). It includes a chassis, a number of lamps such as cold cathode tubes, and an inverter unit. The chassis has an opening in a surface on the liquid crystal panel side. The cold cathode tubes are housed in the chassis. It is arranged so as to cover the opening of the chassis and configured to effectively direct rays of light emitted from the cold cathode tubes toward the liquid crystal panel. The inverter unit is provided for supplying power to the lamps.

Patent Document 1 discloses an example configuration for making electrical connection between an inverter unit and cold cathode tubes. In this configuration, the lamps are arranged on the front side inside the chassis and the inverter unit is arranged on the rear side outside the chassis. Lamp sockets are mounted to the chassis so as to penetrate through the chassis. The lamps are connected to internal ends of the lamp sockets. The inverter unit is connected to external ends of the lamp sockets. Furthermore, a guide is provided behind and outside the chassis. During mounting of the inverter unit to the chassis, the guide guides the inverter unit.

Patent Document 1: Japanese Unexamined Patent Application Publication No. 2008-27880

### Problem to be Solved by the Invention

The inverter unit and the lamp sockets of the liquid crystal display device disclosed in Patent Document 1 are connected together in a following manner. First, the inverter unit is held with the surface facing a back surface of the chassis. Next, the inverter unit is slid horizontally and perpendicular to a row of the lamp sockets, and is fitted with the lamp sockets. In this configuration, the direction perpendicular to the row of the lamp sockets and a short-side direction of the inverter unit are the same. That is, the inverter unit is guided in the short-side direction thereof. However, because the inverter unit easily bends in long sides thereof, the inverter unit is probably misaligned with the lamp sockets. As a result, the inverter unit and the lamp sockets cannot be smoothly assembled together. Furthermore, the inverter unit can be damaged.

### DISCLOSURE OF THE PRESENT INVENTION

The present invention was made in view of the foregoing circumstances, and its object is to prevent damage during connecting of the power supply board to the connector.

### Means for Solving the Problem

In order to solve the above problem, a lighting device according to the present invention includes: a plurality of light sources; a chassis housing the light sources, the chassis having a guide; a power supply board disposed opposite from the light sources with respect to the chassis and configured to supply drive power to the light sources; and a plurality of relay connectors mounted to the chassis and configured to relay power supply between the power supply board and the light sources. The relay connectors are arranged in a row. The power supply board is disposed such that a long-side direction thereof is aligned with a direction along the row of the relay connectors. The power supply board is moved in the direction along the row of the relay connectors so as to be connected to the relay connectors. The guide is configured to guide the power supply board in the direction along the row of the relay connectors.

The guide guides the power supply board during the connecting of the power supply board to the relay connectors. Because of this, the power supply board is less misaligned with the relay connectors. Therefore, the power supply board is smoothly connected to the relay connectors. In particular, the power supply board according to the present invention is disposed such that the long-side direction thereof is aligned with the direction along the row of the relay connectors, and the guide guides the power supply board in the direction along the row of the relay connectors. In other words, the guide guides the power supply board in the long-side direction of the power supply board. Because of this, the power supply board less bends in comparison to a case where the power supply board is guided in the short-side direction thereof. Therefore, the power supply board is still less misaligned with the relay connectors. As a result, the power supply board is smoothly connected to the relay connectors with less misalignment with the relay connectors. This prevents the power supply board from damage.

The present invention may be configured as follows. The chassis is made of metal, and the guide is formed by bending a part of the chassis in sheet-metal processing.
With this configuration, no separate member is needed as the guide. This reduces parts count.

Furthermore, the guide may be a member separate from the chassis.
Because the guide of this configuration is separately prepared, the guide can be designed in any shape.

Furthermore, the guide may include an end having a stopper that restricts movement of the power supply board.
When the power supply board reaches a predetermined position, the movement thereof is restricted by the stopper. Because of this, the power supply board is reliably positioned at the predetermined position.

Furthermore, the present invention may be configured as follows. The guide is made of metal and is a ground of the power supply board for electrical discharge.
With this configuration, electrical charge in the power supply board is released via the guide. This reduces unexpected self-discharge from the power supply board.

Furthermore, the present application may be configured as follows. The guide includes a first guide portion and a second guide portion. The first guide portion guides the power supply board in in-plane directions of the chassis. The second guide portion holds the power supply board at a distance from the chassis.

With the above configuration, the first guide portion positions the power supply board in the in-plane directions of the chassis, and the second guide portion prevents the power supply board from misalignment in a direction perpendicular to the chassis. Because of this, the inverter board is prevented from misalignment with the relay connectors during the connecting with the relay connectors. In particular, because the second guide holds the power supply board at the distance from the chassis, the power supply board is prevented from contacting the chassis. Furthermore, the power supply board is prevented from damage.

Next, in order to solve the above problem, a display device according to the present invention includes: the above-described lighting device; and a display panel that performs display using light from the lighting device. The lighting device of the display device supplies light to the display panel. Because the lighting device is less damaged during assembly, the lighting device is manufactured with less cost and provided with higher operation reliability.

The display panel may be a liquid crystal panel. Such a display device can be applied as a liquid crystal display device to various uses, such as a television receiver or a display monitor for a personal computer. In particular, the display device is suitable for a wide-screen monitor display.

Furthermore, a television receiver according to the present invention includes the above-described display device. The television receiver is manufactured with less cost and provided with higher operation reliability.

### Advantageous Effect of the Invention

According to the present invention, the inverter board is prevented from misalignment with the connectors during the connecting with the connectors. Furthermore, the inverter board is prevented from damage due to the misalignment.

### BRIEF DESCRIPTION OF THE DRAWINGS

FIG. 1 is an exploded perspective view schematically illustrating a television receiver of a first embodiment according to the present invention;
FIG. 2 is a sectional view illustrating a section along a long side of a liquid crystal display device;
FIG. 3 is a plan view illustrating a chassis with cold cathode tubes housed therein;
FIG. 4 is an enlarged bottom view illustrating the chassis with a cover thereon;
FIG. 5 is a sectional view along line A-A in FIG. 4, with an inverter board at a removal position;
FIG. 6 is a sectional view along line B-B in FIG. 4;
FIG. 7 is a bottom view illustrating the chassis with the inverter board mounted thereto;
FIG. 8 is an enlarged bottom view illustrating a main part with the inverter board at a non-connected position;
FIG. 9 is an enlarged bottom view illustrating the main part of the inverter board at a connected position;
FIG. 10 is a sectional view along line C-C in FIG. 9 with the inverter board at the connected position;
FIG. 11 is a bottom view of the chassis, illustrating a configuration of a guide;
FIG. 12 is a sectional view along line D-D in FIG. 9;
FIG. 13 is a sectional view illustrating a guide of a liquid crystal display device of a second embodiment;
FIG. 14 is a sectional view illustrating a modification of the configuration of the guide;

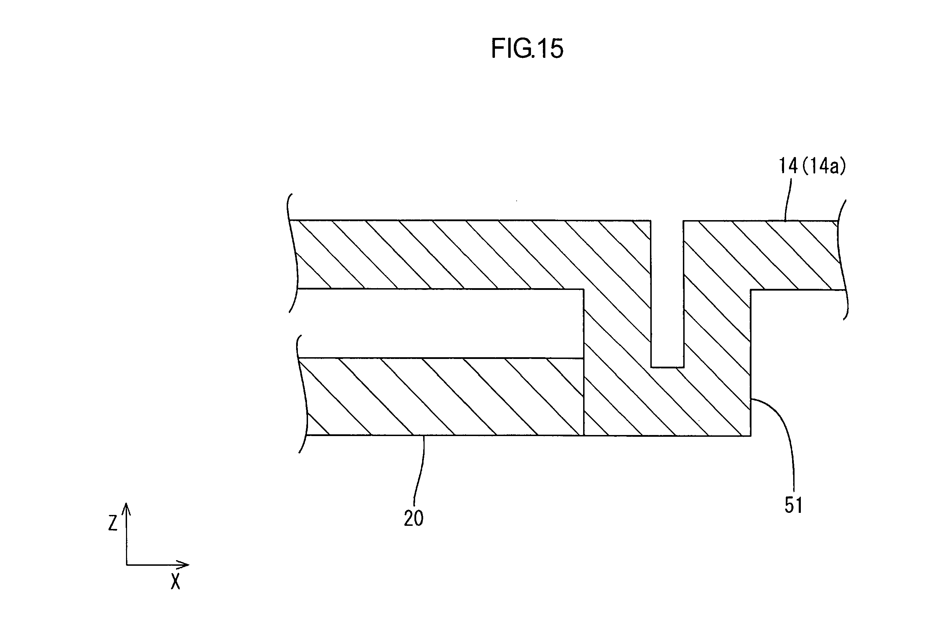

FIG. 15 is a sectional view illustrating another modification of the configuration of the guide; and

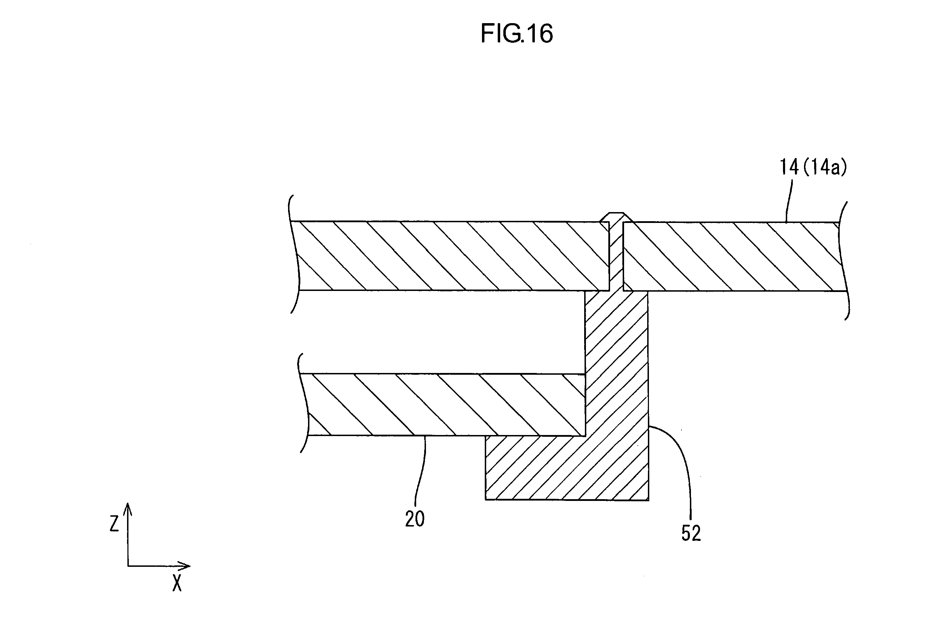

FIG. 16 is a sectional view illustrating another modification of the configuration of the guide.

### BEST MODE FOR CARRYING OUT THE INVENTION

### <First embodiment>

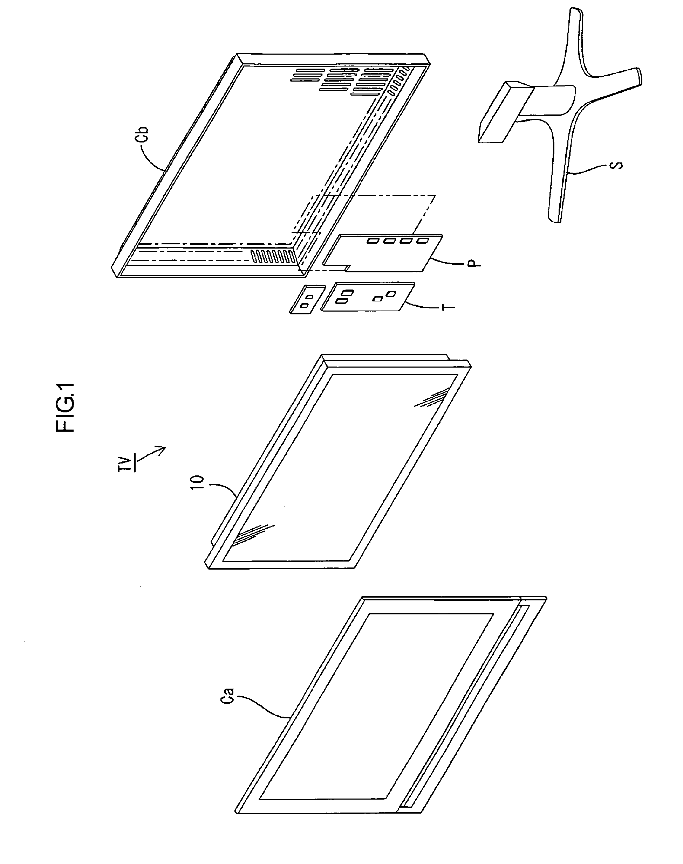

A first embodiment according to the present invention will be described with reference to FIGS. 1 to 12. This embodiment illustrates a liquid crystal display device 10.

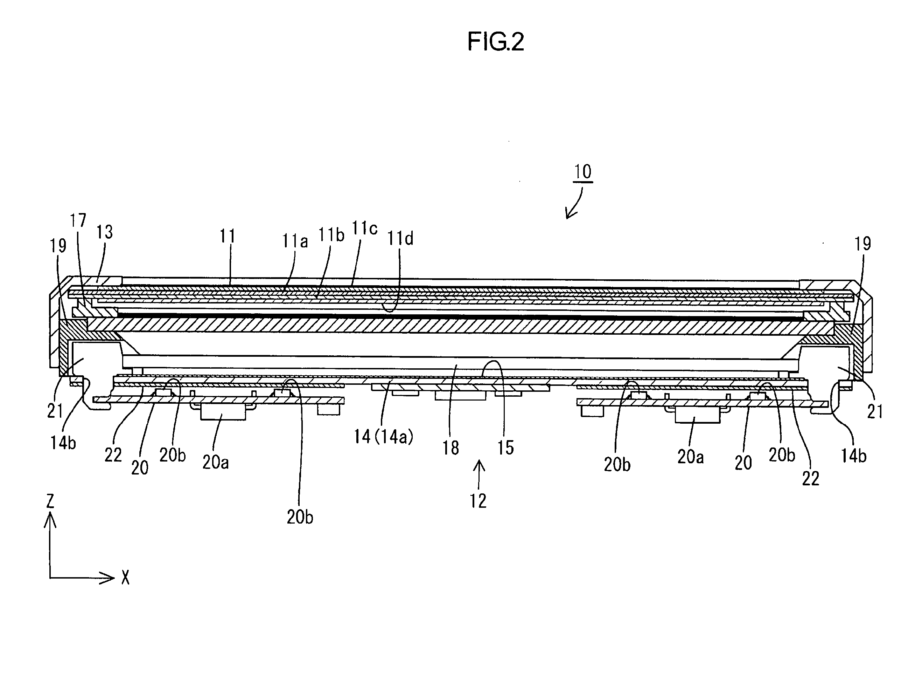

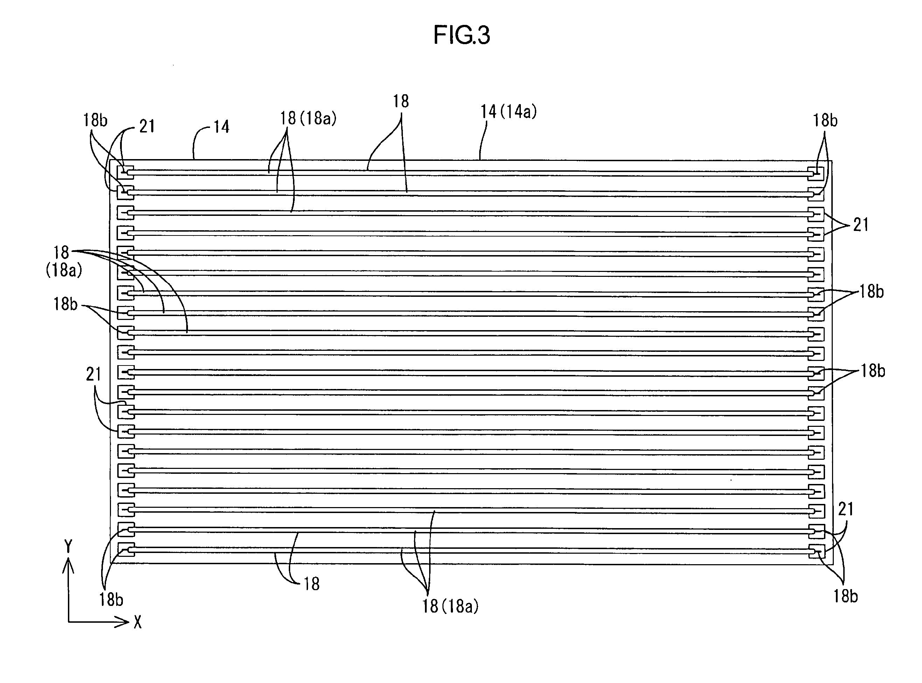

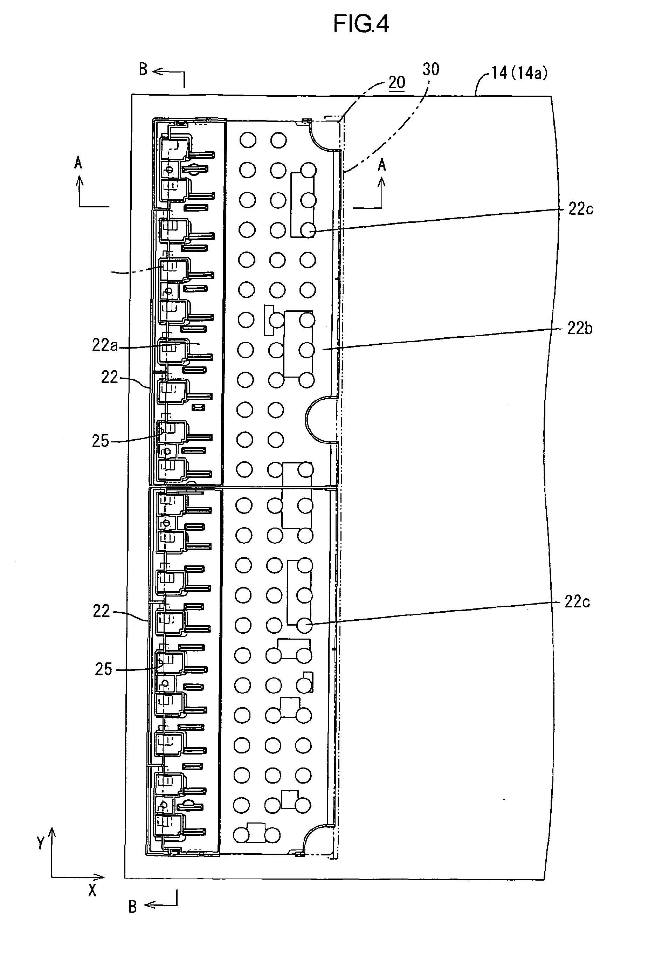

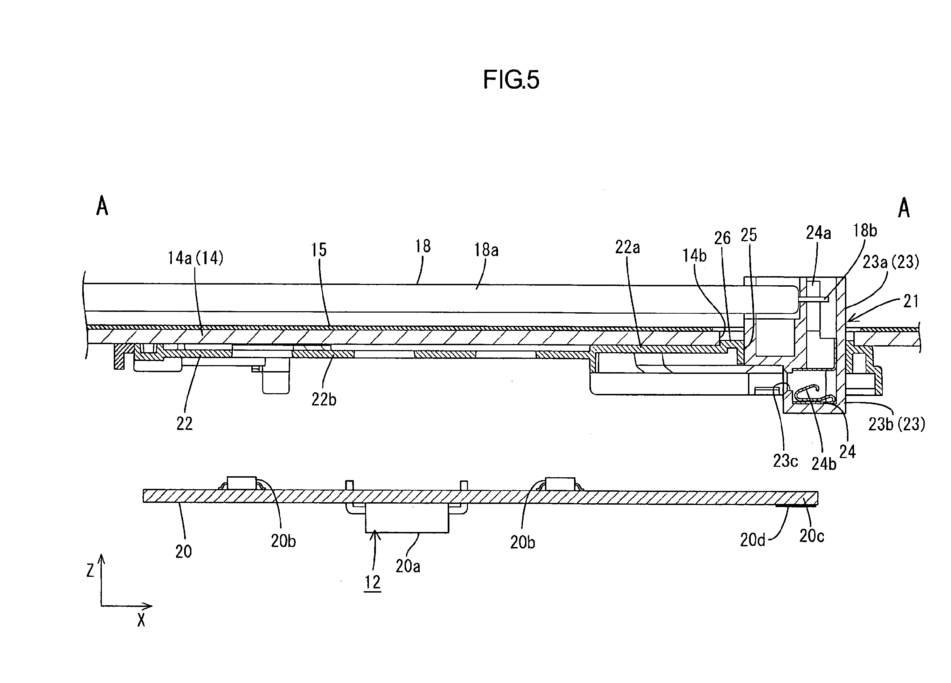

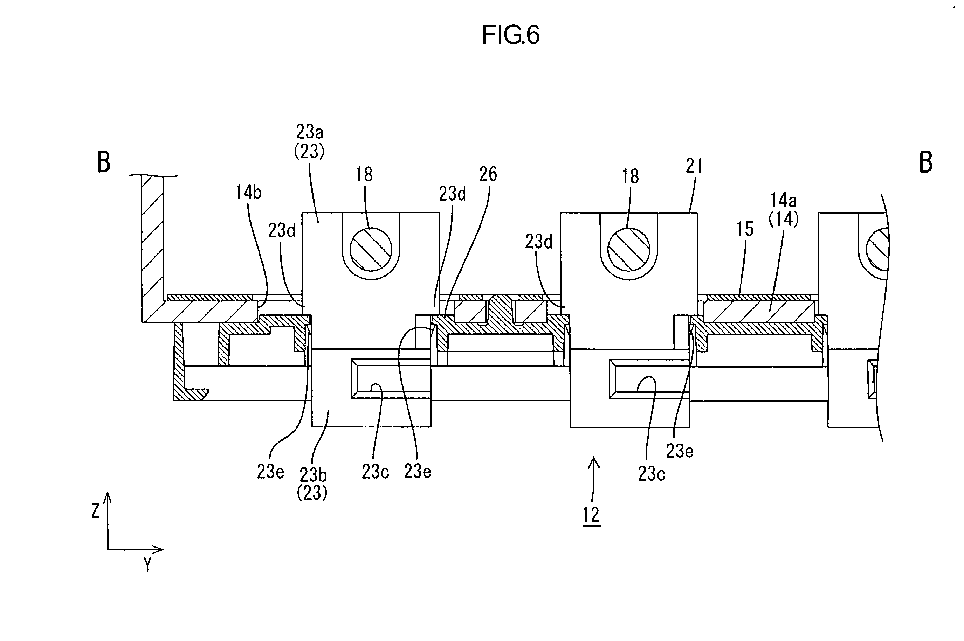

FIG. 1 is an exploded perspective view schematically illustrating a television receiver of the first embodiment according to the present invention. FIG. 2 is a sectional view illustrating a section along a long side of a liquid crystal display device of the television receiver illustrated in FIG. 1. FIG. 3 is a plan view illustrating a chassis with cold cathode tubes housed therein. FIG. 4 is an enlarged bottom view illustrating the chassis with covers thereon. FIG. 5 is a sectional view along line A-A in FIG. 4, with an inverter board in a removed state. FIG. 6 is a sectional view along line B-B in FIG. 4.
X-axes, Y-axes and Z-axes are present in some of the figures to indicate orientations of the liquid crystal display device 10. In FIG. 2, the upper and lower sides correspond to the front side (the front side, the light exit side) and the backside (the rear side, an opposite side from the light exit side), respectively.

As illustrated in FIG. 1, the television receiver TV includes the liquid crystal display device 10 (a display device), a front cabinet Ca, a rear cabinet Cb, a power source P, and a tuner T. The cabinets Ca and Cb sandwich the liquid crystal display device 10 therebetween. The liquid crystal display device 10 is housed in the cabinets Ca and Cb. The liquid crystal display device 10 has a landscape rectangular overall shape. As illustrated in FIG. 2, the liquid crystal display device 10 includes a liquid crystal panel 11, which is a display panel, and a backlight unit 12 (a lighting device), which is an external light source. The liquid crystal panel 11 and the backlight unit 12 are held together by a frame-shaped bezel 13.

Next, the liquid crystal panel 11 and the backlight unit 12 included in the liquid crystal display device 10 will be explained. The liquid crystal display device 10 has a rectangular plan-view shape. As illustrated in FIG. 2, it includes a pair of glass substrates 11a and 11b bonded together with a predetermined gap therebetween and a liquid crystal layer (not shown) sealed between the glass substrates 11a and 11b. On the glass substrate 11a, switching components (e.g., TFTs), pixel electrodes and an alignment film are arranged. The switching components are connected to source lines and gate lines that are perpendicular to each other. The pixel electrodes are connected to the switching components. On the other glass substrate 11b, color filter having color sections of three primary colors of red (R), green (G) and blue (B) arranged in a matrix, counter electrodes and an alignment film are arranged. Image data and various kinds of control signals for displaying images are feed from a drive circuit board, which is not shown, to the source lines, the gate lines and the counter electrode. Polarizing plates 11c and 11d are arranged on outer surfaces of the glass substrates 11a and 11b, respectively.

As illustrated in FIG. 2, the backlight unit 12 is a so-called direct backlight including light sources that are arranged directly behind the liquid crystal panel 11. The backlight unit 12 includes a chassis 14, a reflection sheet 15, a plurality of optical members 16, a frame 17, a plurality of cold cathode tubes 18 (light sources), and holders 19. The chassis 14 has a box-like overall shape and an opening on the front side (the light exit side, the liquid crystal panel 11 side). The reflection sheet 15 is placed inside the chassis 14. The optical members 16 are arranged so as to cover the opening. The frame 17 holds the optical members 16. The cold cathode tubes 18 are arranged in a row and housed in the chassis 14. The holders 19 cover the respective ends of the cold cathode tubes 18 so as to block light. Each holder 19 has light reflectivity. The backlight unit 12 further includes inverter boards 20 (power supply boards), relay connectors 21, and covers 22. The inverter boards 20 are arranged on the rear of the chassis 14. The relay connectors 21 are provided for relaying power supply from the inverter boards 20 to the cold cathode tubes 18.

The chassis 14 is made of metal, for instance, aluminum. The chassis 14 includes a bottom plate 14a having a substantially rectangular plan-view shape similar to the liquid crystal panel 11. The long-side direction and the short-side direction of the bottom plate 14a match the X-axis direction and the Y-axis direction indicated in the drawings, respectively. The bottom plate 14a has connector insertion holes 14b in end areas of the long dimension thereof. The connector insertion holes 14b are through holes in which the relay connectors 21 are inserted. A plurality of them (the number required for the cold cathode tubes 18 and the relay connectors 21) are arranged in rows along the Y-axis direction (the short sides of the bottom plate 14a). The reflection sheet 15 is made of white synthetic resin having high light reflectivity. It is placed over the inner surface of the chassis 14 so as to cover substantially an entire area and configured to reflect rays of light from the cold cathode tubes 18 toward the optical members 16 (the light exit side). The reflection sheet 15 has holes continue into the connector insertion holes 14b.

Each optical member 16 has a rectangular shape similar to the bottom plate 14a of the chassis 14 or the liquid crystal panel 11. The optical members 16 include a diffuser plate, a diffuser sheet, a lens sheet and a brightness enhancement sheet arranged in this order from the rear side. They are configured to convert light emitted from each cold cathode tube, which is a linear light source, into planar light.

The frame 17 is formed in a frame shape along the outer edges of the liquid crystal panel 11 and the optical members 16. The frame 17 is arranged in front of the optical members 16. The outer edges of the optical members 16 are held between the frame 17 and the holders 19. The frame 17 supports the liquid crystal panel 11 from the rear side. The liquid crystal panel 11 is sandwiched between the frame 17 and the bezel 13 that is arranged in front of the liquid crystal panel 11.

The cold cathode tubes 18 are one kind of linear light sources (tubular light sources). As illustrated in FIG. 3, the cold cathode tubes 18 are mounted inside the chassis 14 with the axial direction thereof (the X-axis direction) aligned with the long-side direction of the chassis 14. They are arranged such that the axes thereof are substantially parallel to each other and a predetermined distance away from each other in the short side direction of the chassis 14 (the Y-axis direction).

The cold cathode tubes 18 are one kind of discharge tubes. As illustrated in FIG. 5, each of them includes an elongated glass tube 18a, a pair of electrodes (not shown) and a pair of outer leads 18b. The glass tube 18a has a circular cross section and closed ends. The electrodes are enclosed in the glass tube 18a and located at the respective ends of the glass tube 18a. The outer leads 18b project from the respective ends of the glass tube 18a to the outside. Mercury that is a luminescent material is sealed in the glass tube 18a and a fluorescent material is applied to the inner walls of the glass tube 18a (neither the luminescent material nor the fluorescent material are shown). Each outer lead 18b is made of metal having electrical conductivity and formed in an elongated round post-like shape. It projects outward (in an opposite direction to the electrode) from the end of the glass tube 18a and extends along the axial direction (the X-axis direction). The internal end of the outer lead 18b is connected to the electrode inside the glass tube 18a and thus the outer lead 18b and the electrode are at the same potential.

Each holder 19 is made of white synthetic resin having high light reflectivity. As illustrated in FIG. 2, it extends along the short side of the chassis 14 and has a box-like shape with an opening on the rear side. The holders 19 are attached to the respective ends of the long side of the chassis 14 so as to collectively cover the respective ends of the cold cathode tubes 18 (non-light-emitting portions) arranged in a row at the ends.

As illustrated in FIG. 5, each relay connector 21 includes a housing 23 and a terminal 24. The housing 23 is made of insulating synthetic resin (such as polybutylene terephthalate resin, nylon, or the like). The relay connector 21 has a substantially block-like overall shape. The terminal 24 is housed in the housing 23. Each relay connector 21 is passed through the bottom plate 14a of the chassis 14, and is mounted. As illustrated in FIG. 6, a part of the housing 23 is disposed inside the chassis 14. That part is a light source holding portion 23a. The light source holding portion 23a holds the corresponding end of the cold cathode tube 18. Another part of the housing 23 is disposed outside the chassis 14. This part is a board holding portion 23b. The board holding portion 23b holds a connector connecting portion 20c of the inverter board 20, which will be described later. The light source holding portion 23a has an arcuate groove corresponding to a shape of the end of the cold cathode tube 18. The board holding portion 23b has a board holding hole 23c. The board holding hole 23c opens to the rear (toward the inverter board 20) in the X-axis direction. Furthermore, the board holding hole 23c opens to the right in FIG. 6 in the Y-axis direction. As illustrated in FIG. 6, the chassis 14 directly holds the housing 23. Specifically, the light source holding portion 23a includes a wide portion 23d. The light source holding portion 23a with the wide portion 23d has a larger Y-axis dimension than that of the board holding portion 23b. The wide portion 23d is held against a front side of the chassis 14. The board holding portion 23b includes stoppers 23e that are connected with a rear side of the chassis 14.

As illustrated in FIG. 5, an end of each terminal 24 is disposed in the light source holding portion 23a. That end is a light source contact portion 24a. The light source contact portion 24a contacts the corresponding outer lead 18b of the cold cathode tube 18. Another end of the terminal 24 is disposed in the board holding portion 23b. That end is a board contact portion 24b. The board contact portion 24b contacts the terminal 20d of the corresponding connector connecting portion 20c. The light source contact portion 24a and the board contact portion 24b have resilience to elastically contact the outer lead 18b and the terminal 20d, respectively. An output voltage of the inverter board 20 is applied to the outer leads 18b and the electrodes of the cold cathode tubes 18 via the relay connectors 21.

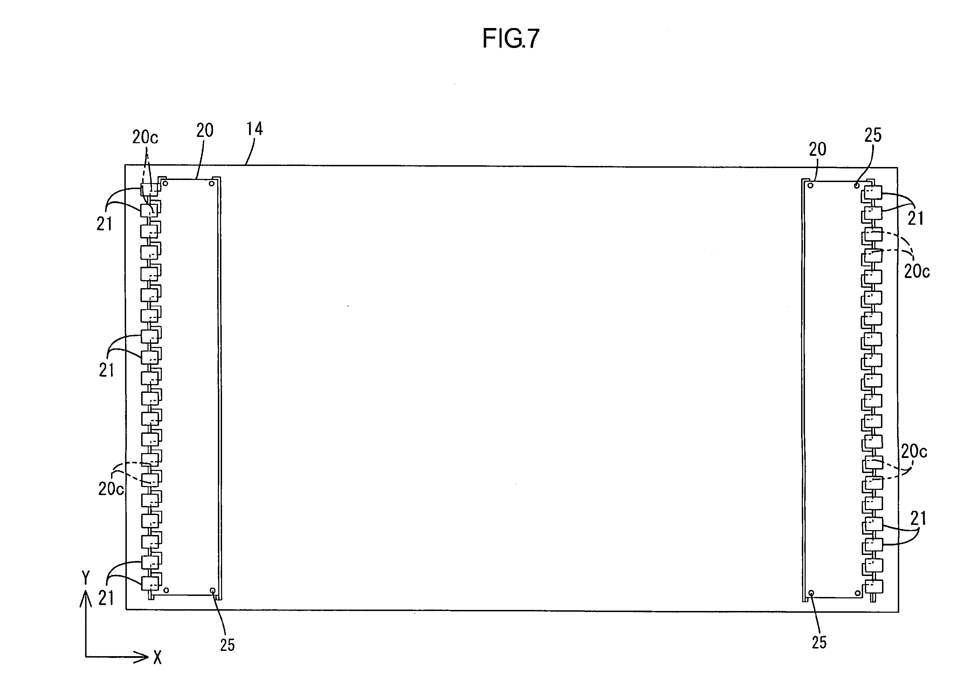

The relay connectors 21 are arranged in pairs. The individual relay connectors 21 in each pair are disposed in positions corresponding to the respective end portions of the corresponding cold cathode tube 18, i.e. are disposed at respective positions located at two ends in the direction along the long sides of the bottom plate 14a of the chassis 14. The relay connectors 21 in pairs are arranged in rows in a direction along the short sides of the bottom plate 14a (or in the Y-axis direction, or in the direction in which the cold cathode tubes 18 are arranged) (see FIG. 7). The number of the relay connectors 21 in each row is equal to the number of the cold cathode tubes 18. The intervals between the relay connectors 21 in each row are substantially equal to the respective intervals between the cold cathode tubes 18. The Y-axis positions of the relay connectors 21 are substantially aligned with those of the cold cathode tubes 18.

Each cover 22 is made of synthetic resin having insulation properties. As illustrated in FIG. 2, the cover 22 is placed between the bottom plate 14a of the chassis 14 and the inverter board 20 (i.e., is held therebetween). It protects the wiring patterns and the chip components 20b on the inverter board 20 from directly touching the bottom plate 14a. The covers 22 are mounted to the rear surface of the bottom plate 14a (the surface away from the cold cathode tubes 18) at the ends of the long dimension of the bottom plate 14a in pairs. They cover the areas of the bottom plate 14a in which the relay connectors 21 are arranged.

As illustrated in FIG. 4, each cover 22 has a rectangular plan-view shape. The covers 22 are arranged along the Y-axis direction and parallel to each other. The long-side direction thereof is aligned with the short-side direction of the bottom plate 14a. The covers 22 are fixed to the respective ends of the long dimension of the bottom plate 14a with screws. The long dimension of each cover 22 is about a half of the short dimension of the chassis 14 or the long dimension of the inverter board 20. The cover 22 has a plate-like shape and the board surface thereof is parallel to the bottom plate 14a of the chassis 14 and the board surface of the inverter board 20. A part of each cover 22 relatively close to the relay connectors 21 (or the end of the chassis 14) is a front portion 22a, and a part of each cover 22 relatively away from the relay connectors 21 (or close to the middle of the chassis 14) is a rear portion 22b. The rear portion 22b has heat dissipation holes 22c that are through holes for dissipating heat and arranged in a matrix.

The inverter board 20 will be described with reference to FIGS. 2 and 7 to 10.
FIG. 7 is a bottom view illustrating the chassis with the inverter board mounted thereto.
The inverter board 20 includes a base, a predetermined wiring pattern formed on the base, and electronic components mounted to the base. The base is made of synthetic resin (such as glass fabric base epoxy resin, paper phenol, or the like). Specifically, as illustrated in FIG. 2, lead components 20a including power transformers and capacitors are mounted on the rear surface of the inverter board 20 (the surface away from the chassis 14). On the front surface of the inverter board 20 (the surface close to the chassis 14), wiring patterns (not shown) are formed and chip components 20b including resistors, diodes and capacitors are mounted. Leads of the lead components 20a are passed through the inverter board 20 so as to project from the front surface via the through holes and soldered to the wiring patterns. The chip components 20b are surface-mounted on the wiring patterns on the front surface of the inverter board 20. The inverter board 20 is connected to the power source P of the liquid crystal display device 10. It is configured to step up an input voltage from the power source P and to output a voltage higher than the input voltage. The output voltage is applied to each cold cathode tube 18. The inverter board 20 controls turning on-and-off of the cold cathode tubes 18. In FIGS. 7 to 10, the lead components 20a and the chip components 20b are not illustrated.

As illustrated in FIG. 7, the inverter boards 20 are mounted on the rear surface of the bottom plate 14a of the chassis 14 (the surface away from the cold cathode tubes 18) via the cover 22. The inverter boards 20 are arranged at the respective ends of the long dimension of the bottom plate 14a so as to be symmetric. Each inverter board 20 has a substantially rectangular plan-view shape. The board surface of the inverter board 20 is substantially parallel to the board surface of the bottom plate 14a of the chassis 14. The long-side direction of the inverter board 20 is aligned with the direction along the row of the relay connectors 21 (the Y-axis direction, the short-side direction of the bottom plate 14a). Four corners of the inverter boards 20 are fixed to the bottom plate 14a with metal screws 25.

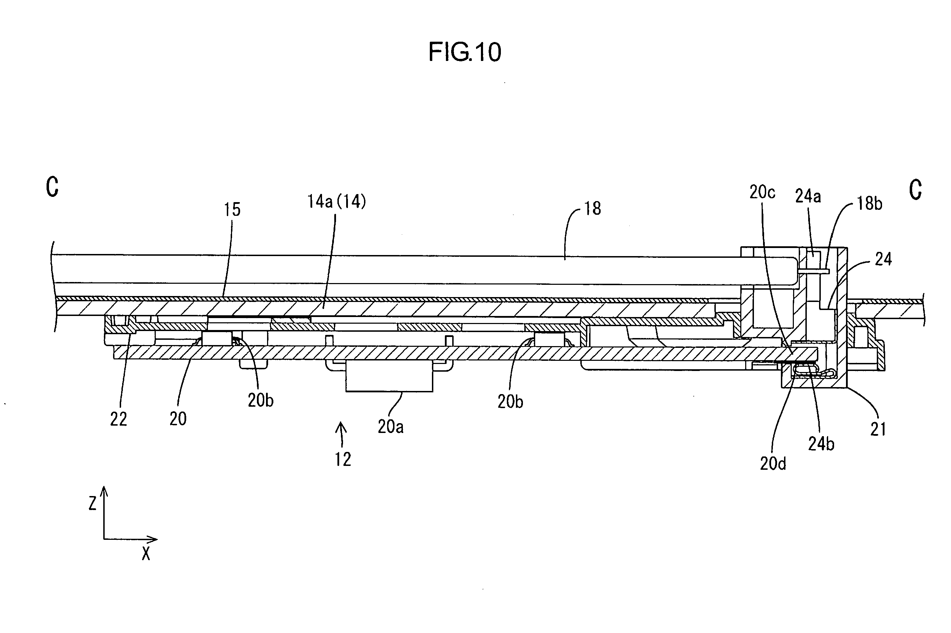

Each inverter board 20 has an end portion closer to the relay connector 21. The end portion has the connector connecting portions 20c fittingly connected with the relay connectors 21. A plurality of the connector connecting portions 20c are provided in a row along the long side of the inverter board 20 (one for each relay connector 21) by cutting out some parts of the end portion of the inverter board 20. Namely, the end portion of the inverter board 20 is formed in a comb-like shape. As illustrated in FIG. 10, the connector connecting portions 20c are individually fitted with the respective relay connectors 21. Each connector connecting portion 20c includes a terminal 20d at a distal end thereof. The terminal 20d extends from the wiring pattern. The connector connecting portion 20c has a width larger than a width of the opening of the board holding hole 23c of the relay connector 21. The difference between these two widths is substantially equal to the interval between adjacent ones of the relay connectors 21.

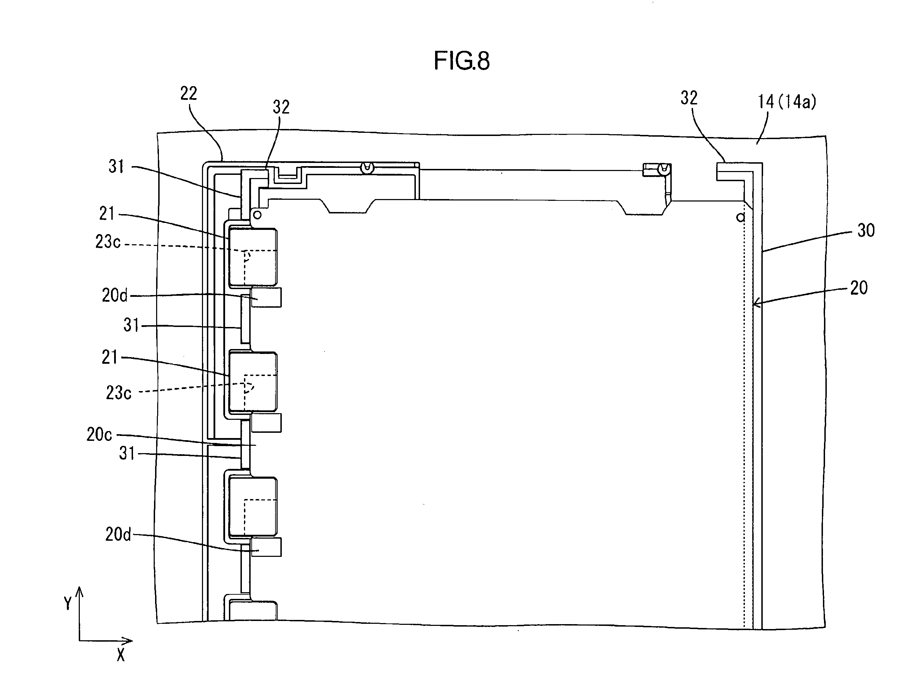

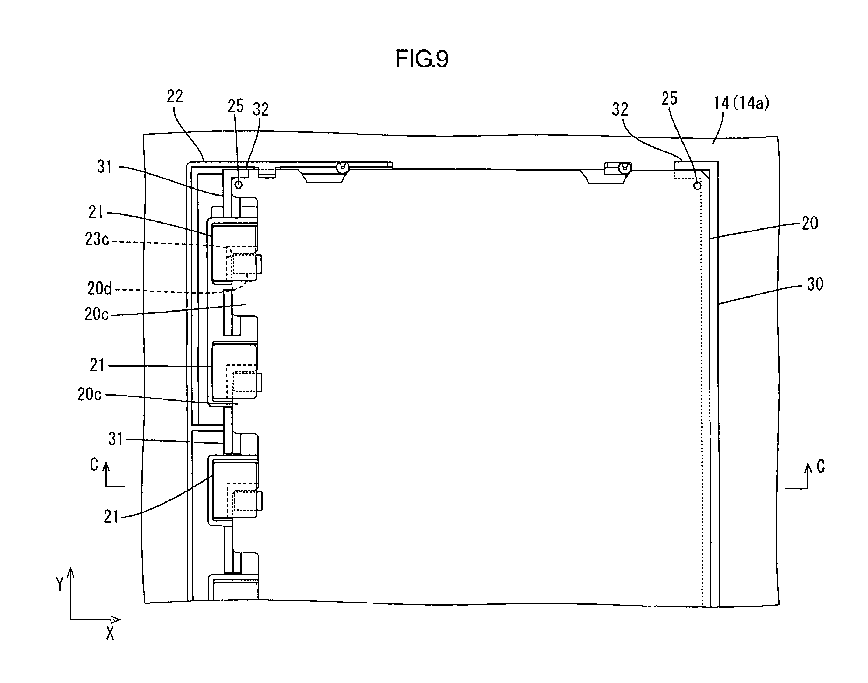

The inverter board 20 can be moved in the Y-axis direction (a long-side direction of the inverter board 20, the direction along the row of the relay connectors 21) along the bottom plate 14a of the chassis 14 (along the board surface of the inverter board 20) between a non-connected position (FIG. 8) and a connected position (FIGS. 9 and 10). At the non-connected position, the inverter board 20 is opposed to the bottom plate 14a of the chassis 14 with a predetermined distance therebetween, and the connector connecting portions 20c are away from the relay connectors 21. At the connected position, the connector connecting portions 20c are fitted with the relay connectors 21, and the inverter board 20 is held at a similar distance from the bottom plate 14a (at a similar Z-axis position) as being at the non-connected position. As illustrated in FIG. 8, the connector connecting portions 20c are located a predetermined distance away in the Y-axis direction from the relay connectors 21, and the terminals 20d are not in contact with the terminals 24 of the relay connectors 21, when the inverter board 20 is at the non-connected position. On the other hand, as illustrated in FIGS. 9 and 10, the connector connecting portions 20c are located in the relay connectors 21, and the terminals 20d are in contact with the terminals 24, when the inverter board 20 is at the connected position. The inverter board 20 can be horizontally moved in the direction along the row of the relay connectors 21 (in the Y-axis direction) between the non-connected position and the connected position. A direction from the non-connected position toward the connected position is a connecting direction. A direction from the connected position toward the non-connected position is a disconnecting direction. Upward and downward directions along the Y-axis direction in FIGS. 7 to 9 correspond to the connecting direction and the disconnecting direction, respectively. In the following descriptions about the connecting direction and the disconnecting direction of the inverter boards 20 to or from the relay connectors 21, the left inverter board 20 and the left relay connectors 21 in FIG. 7 will be referred to. In descriptions related to backward and frontward directions, the upward and downward directions along the Y-axis direction in FIGS. 7 to 9 will be referred to as the frontward and backward directions, respectively.

As described above, the inverter board 20 is connected to the relay connectors 21 by being moved from the non-connected position to the connected position while being held at the predetermined Z-axis position relative to the chassis 14. However, if the inverter board 20 is misaligned in the X, Y, and/or Z directions with the chassis 14 when it is mounted to the chassis 14, the connector connecting portions 20c of the inverter board 20 cannot be smoothly fitted with the relay connectors 21. Furthermore, the inverter board 20 may be damaged.

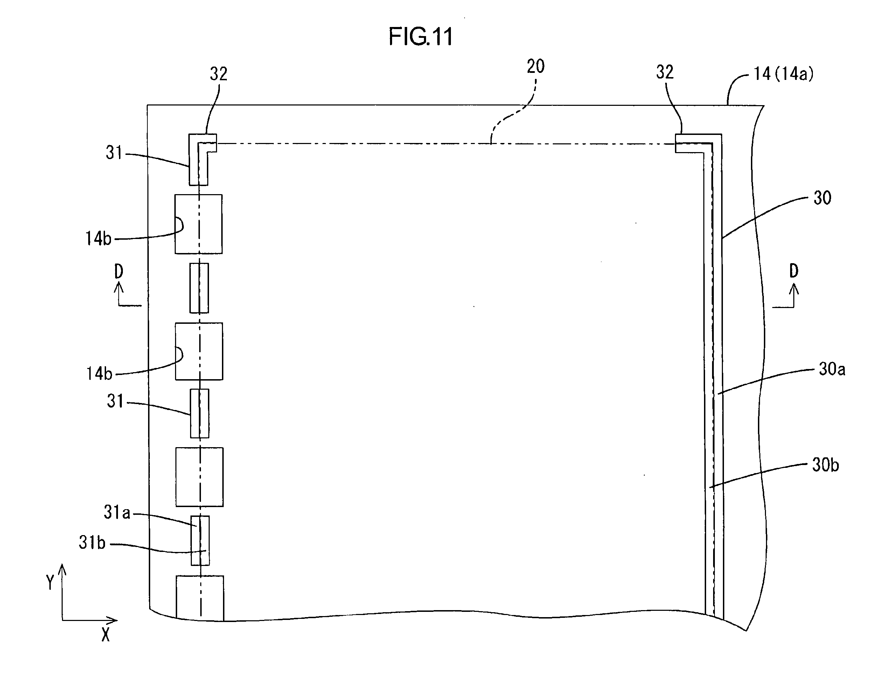

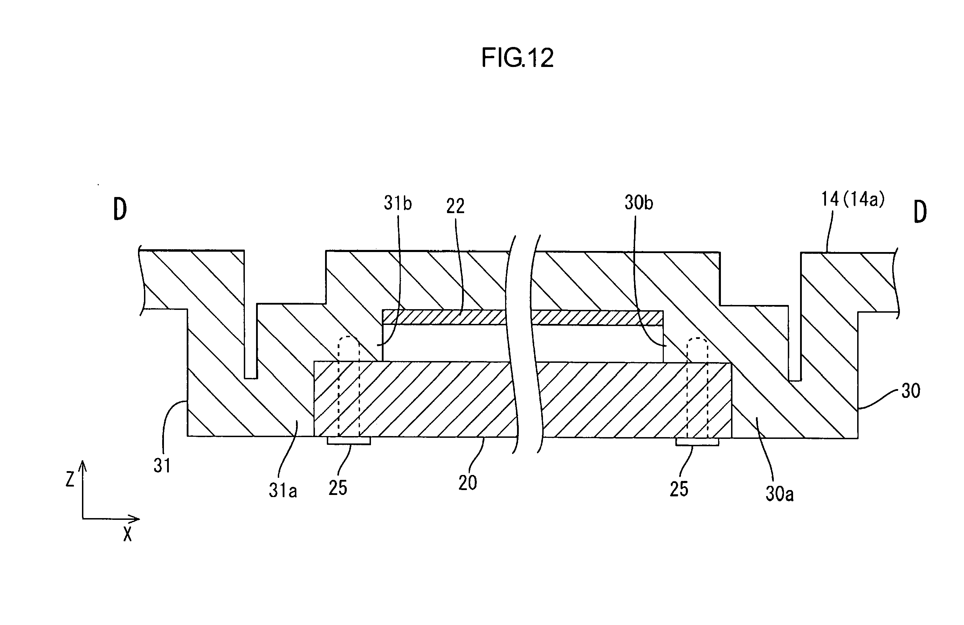

As a countermeasure for this, the chassis 14 of this embodiment has pairs of guides 30, 31. As illustrated in FIGS. 11 and 12, each pair of guides 30, 31 guides the corresponding inverter board 20 in the direction along the row of the relay connectors 21 (in the Y-axis direction). As illustrated in FIG. 11, the guides 30, 31 include a main guide 30 and sub guides 31, and the inverter board 20 has two end portions opposite from each other. One of these two end portions of the inverter board 20 has no connector connecting portions 20c. The main guide 30 guides the edge of this end portion of the inverter board 20. The main guide 30 continuously extends in the direction along the row of the relay connectors 21. The inverter board 20 has the connector connecting portions 20c on the other one of the above two end portions thereof. The sub guide 31 guides the edge on this end portion of the inverter board 20. The sub guides 31 are disposed between respective adjacent ones of the connector insertion holes 14b. In other words, the sub guides 31 are disposed separately from one another.

As illustrated in FIG. 12, the guides 30, 31 are formed by bending parts of the chassis 14 generally in L shapes in sheet-metal processing. The guides 30, 31 include first guide portions 30a, 31a, respectively, and second guide portions 30b, 31b, respectively. The first guide portions 30a, 31a upstand perpendicularly from the bottom plate 14a of the chassis 14. The second guide portions 30b, 31b extend parallel to the bottom plate 14a. As illustrated in FIG. 12, each first guide portion 30a, 31a is formed by bending parts of the bottom plate 14a in a direction perpendicular to the bottom plate 14a (in the Z-axis direction) so as to form a substantial U shape. The first guide portion 30a, 31a projects from the bottom plate 14a to the backside (downward in the Z-axis direction). The second guide portions 30b, 31b extend parallel to the bottom plate 14a (in the X-axis direction) from ends of the first guide portions 30a, 31a, respectively, and, further, toward the bottom plate 14a. Each first guide portion 30a, 31a has a surface upstanding from the corresponding second guide portion 30b, 31b. These surfaces of the first guide portions 30a, 31a contact side surfaces of the respective long sides of the inverter board 20. By this contact, the inverter board 20 is prevented from misalignment in the in-plane directions of the bottom plate 14a of the chassis 14. Each second guide portion 30b, 31b has a surface parallel to the bottom plate 14a. These surfaces of the second guide portions 30b, 31b contact the front surface of the inverter board 20. By this contact, the inverter board 20 is held at a predetermined distance (by a height of the second guide portion 30b or 31b) from the chassis 14.

As illustrated in FIG. 11, distal end portions of the guides 30, 31 in the connecting direction of the inverter board 20 (upper end portions in the Y-axis direction) are bent about 90 degrees so as to extend toward each other and provided as stoppers 32. Because of the stoppers 32, the dimension between the distal end portions of the guides 30, 31 is smaller than the short-side dimension of the inverter board 20. The dimension between the other portions of the guides 30, 31 is substantially equal to the short-side dimension of the inverter board 20. When the inverter board 20 reaches the connected position, a front end (an end in the connecting direction) thereof contact the stoppers 32. By this contact, the further movement of the inverter board 20 from the predetermined position is restricted.

This embodiment has the above configuration, and its functions will hereinafter be explained. The liquid crystal panel 11 and the backlight unit 12 prepared separately are fixed together by the bezel 13, and the liquid crystal display device 10 having the above configuration is prepared. Assembly of the backlight unit 12 will be explained.

When assembling the backlight unit 12, the reflection sheet 15 is placed over the front inner surface of the chassis 14. The relay connectors 21 are mounted to the chassis 14 from the inner side of the chassis 14. The relay connectors 21 are held by the chassis 14. Then, the cold cathode tubes 18 are installed in the chassis 14. The outer leads 18b at the ends thereof are inserted in the light source holding portions 23a of the relay connectors 21 so as to elastically contact the light source contact portions 24a of the terminals 24. The holders 19, the optical members 16 and the frame 17 are mounted to the chassis 14 from the front (see FIG. 2).

On the rear side of the chassis 14, the inverter boards 20 are mounted to the chassis 14. Each inverter board 20 is moved close to the chassis 14 from a removal position illustrated in FIG. 5 with the surfaces on which the wiring pattern is provided on the front side. The inverter board 20 is moved from the rear side toward the chassis 14 along the Z-axis direction until it is set at the non-connected position illustrated in FIG. 8. During this mounting, side surfaces of the inverter board 20 come into contact with the respective first guide portions 30a, 31a of the guides 30, 31, and edge portions of the front surface of the inverter board 20 come into contact with the respective second guide portions 30b, 31b. As a result, the inverter board 20 is set at the predetermined distance (by a height of the second guide portions 30b, 31b) from the chassis 14 while being prevented from X-axis misalignment.

Next, the inverter board 20 is moved from the non-connected position to the connected position. The inverter board 20 is pushed frontward in the Y-axis direction from the non-connected position. During this movement, the first guide portions 30a, 31a prevent the inverter board 20 from X-axis misalignment, and the second guide portions 30b, 31b prevent the inverter board 20 from Z-axis misalignment. Because of this, the inverter board 20 is moved in the Y-axis direction or in the direction along the row of the relay connectors 21. Finally, the inverter board 20 reaches the connected position. Then, as illustrated in FIGS. 9 and 10, the board contact portions 24b of the terminals 24 of the relay connectors 21 come into elastic contact with the terminals 20d of the connector connecting portions 20c. As a result, the inverter boards 20 are electrically connected to the cold cathode tubes 18 via the relay connectors 21, so that power supply to the cold cathode tubes 18 becomes available. Furthermore, the front end (the distal end in the connecting direction) of the inverter board 20 contacts the stoppers 32 of the guides 30, 31. By this contact, further movement of the inverter board 20 is restricted.

At the connected position, the inverter board 20 is fixed to the chassis 14 via the guides 30, 31 by screws 25 (see FIG. 12). The screws 25 contact grounding wirings of the inverter board 20. By this contact, currents can flow from the inverter board 20 to the guides 30, 31 via the screws 25 so that electrical charge in the inverter board 20 is released. In other words, the guides 30, 31 function as the ground for releasing electrical charge in the inverter board 20.

As described above, the backlight unit 12 of this embodiment includes: the cold cathode tubes 18; the chassis 14 housing the cold cathode tubes 18, the chassis 14 having guides 30, 31; the inverter board 20 disposed opposite from the cold cathode tubes 18 with respect to the chassis 14 and configured to supply drive power to the cold cathode tubes 18; and the relay connectors 21 mounted to the chassis 14 and configured to relay power supply between the inverter board 20 and the cold cathode tubes 18. The relay connectors 21 are arranged in a row. The inverter board 20 is disposed such that the long side thereof extends in the direction along the row of the relay connectors 21. The inverter board 20 is moved in the direction along the row of the relay connectors so as to be connected to the relay connectors 21. The guides 30, 31 are configured to guide the inverter board 20 in the direction along the row of the relay connectors.

With this configuration, the guides 30, 31 guide the inverter board 20 during the connecting of the inverter board 20 to the relay connectors 21. Because of this, the inverter board 20 is less misaligned with the relay connectors 21. Therefore, the inverter board 20 is smoothly connected to the relay connectors 21. In particular, the inverter board 20 of this embodiment is disposed such that the long side thereof extends in the direction along the row of the relay connectors 21, and the guides 30, 31 guide the inverter board 20 in the direction along the row of the relay connectors 21. In other words, the guides 30, 31 guide the inverter board 20 in the long-side direction of the inverter board 20. Because of this, the inverter board 20 less bends in comparison to a case where the inverter board 20 is guided in the short-side direction thereof. Therefore, the inverter board 20 is still less misaligned with the relay connectors 21. As a result, the inverter board 20 is smoothly connected to the relay connectors 21 with less misalignment with the relay connectors 21. This prevents the inverter board 20 from damage.

Furthermore, the chassis 14 of this embodiment is made of metal, and the guides 30, 31 are formed by bending the parts of the sheet metal of the chassis 14 in sheet-metal processing.
Because no separate parts are needed as the guides 30, 31, the parts count is less.

Furthermore, the guides 30, 31 have the ends including the stoppers 32 to restrict the movement of the inverter board 20.
The stoppers 32 restrict the movement of the inverter board 20 when the inverter board reaches the predetermined position (the connected position). Because of this, the inverter board 20 is reliably set at the predetermined position.

Furthermore, the guides 30, 31 are made of metal and function as the ground of the inverter board 20 for electrical discharge. This reduces unexpected self-discharge from the inverter board 20.

Furthermore, the guides 30, 31 include the first guide portions 30a, 31a, respectively, and the second guide portions 30b, 31b, respectively. The first guide portions 30a, 31a guide the inverter board 20 in in-plane directions of the chassis 14. The second guide portions 30b, 31b hold the inverter board 20 at a distance from the chassis 14.
With this configuration, the first guide portions 30a, 31a position the inverter board 20 in the in-plane directions (in the X-axis and Y-axis directions) of the chassis 14, and the second guide portions 30b, 31b prevent the inverter board 20 from the misalignment in a direction perpendicular to the chassis 14 (Z-axis misalignment). Because of this, the inverter board 20 is prevented from the misalignment with the relay connectors 21 during the connecting with the relay connectors 21. In particular, because the second guide portions 30b, 31b hold the inverter board 20 at a distance from the chassis 14, the inverter board 20 is prevented from contacting the chassis 14. Furthermore, the inverter board 20 is prevented from damage.

### <Second embodiment>

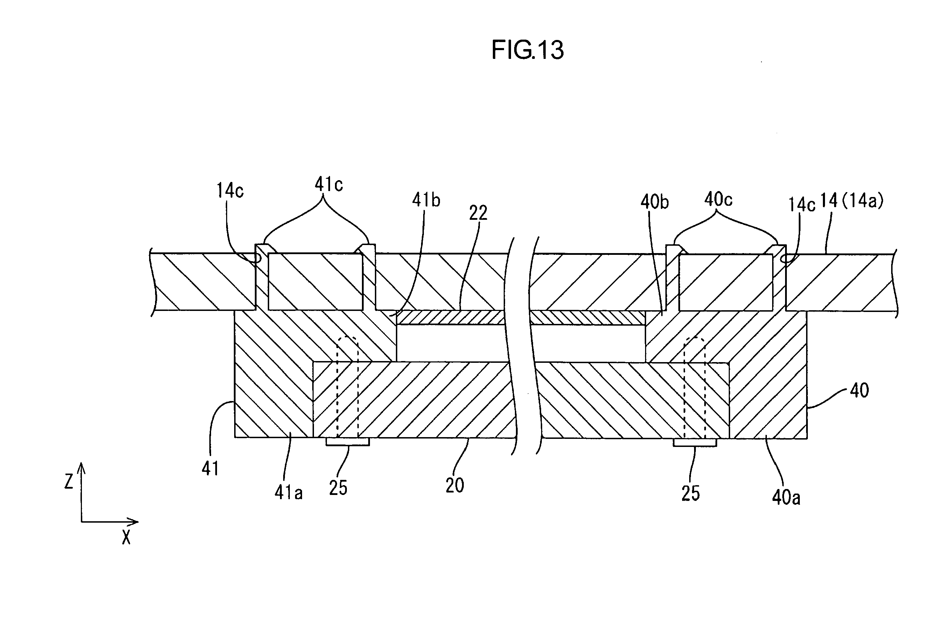

A second embodiment according to the present invention will be described with reference to FIG. 13. This embodiment illustrates guides 40, 41, which are different from those of the first embodiment. The same components as those of the first embodiment will be indicated by the same symbols without repetitive description.
FIG. 13 is a sectional view illustrating a section of the guide of the liquid crystal display device of this embodiment.

The guides 40, 41 are made of synthetic resin. As illustrated in FIG. 13, each of the guides 40, 41 has a substantially L-shaped cross section. Similar to the main guide 30 of the first embodiment, the guide 40 continuously extends in the direction along the row of the relay connectors 21. Similar to the sub guide 31 of the first embodiment, the guides 41 are disposed separately from one another in the direction along the row of the relay connectors 21. The guides 40, 41 include first guide portions 40a, 41a, respectively, and second guide portions 40b, 41b, respectively. The first guide portions 40a, 41a upstand perpendicularly from the back surface of the bottom plate 14a of the chassis 14. The second guide portions 40b, 41b extend parallel to the bottom plate 14a. The first guide portions 40a, 41a contact the side surfaces of respective the long sides of the inverter board 20. By this contact, the inverter board 20 is prevented from X-axis misalignment. The second guide portions 40b, 41b contact the respective edge portions of the front surface of the inverter board 20. By this contact, the inverter board 20 is prevented from Z-axis misalignment while being held at a predetermined distance (by a height of the second guide portion 40b or 41b) from the chassis 14.

The guides 40, 41 have claws 40c, 41c, respectively, on top surfaces (surfaces facing the bottom plate 14a, upper surfaces in the Z-axis direction) thereof. Each claw 40c, 41c has a hook shape so as to be connected with the chassis 14. The claws 40c, 41c are passed through guide engaging holes 14c of the chassis 14 and are held against the front surface of the chassis 14. The guides 40, 41 are fixed to the chassis 14 by the claws 40c, 41c. While the guides 40, 41 of this embodiment are thus fixed to the chassis 14 by the claws 40c, 41c, the guides 40, 41 may be fixed to the chassis 14 by screws and the like.

As described above, because the guides 40, 41 of this embodiment are prepared separately from the chassis 14, the guides may be designed in any shape with less restraint. Furthermore, because the guides 40, 41 are made of synthetic resin, the inverter board 20 is less damaged due to contact with the guides 40, 41.

While this embodiment illustrates the guides 40, 41 made of synthetic resin, the guides 40, 41 may be made of metal. The guides 40, 41 made of metal can function as the ground for releasing electrical charge in the inverter board 20.

### <Other embodiment>

The present invention is not limited to the above embodiments explained in the above description with reference to the drawings. Following embodiments also are included in the technical scope of the present invention, for example.

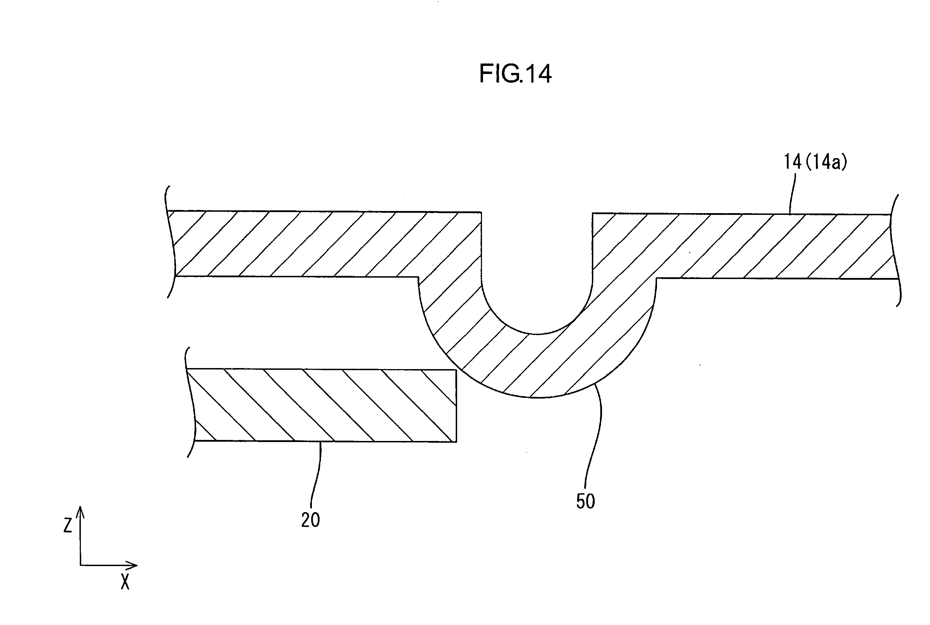

(1) In the above-described embodiments, each guide has a generally L-shaped cross section. The guide may have a cross section in any shape. For example, the guide may be a guide 50 having an arcuate cross section as illustrated in FIG. 14, a guide 51 having a generally U-shaped cross section, or a guide 52 having a shape to hang an inverter board.

(2) In the above-described embodiments, the stoppers are provided at the distal ends of the guides. The stoppers are not necessarily provided at the distal ends of the guides.

(3) In the above-described embodiments, two types of guides are provided: the continuously extending guide and the guides disposed separately from one another. The combination of the guides is not limited to this. The same type of guides may be provided, that is, two continuously extending guides or extending guides disposed separately from one another may be provided.

(3) In the above-described embodiments, the guide includes guides in pair that guides two long sides of the inverter board. The guide is not necessarily provided in pair. For example, the guides may have a single guide that guides only one of the long sides of the inerter board.

(2) Each of the above-described embodiments illustrates the components mounted on the inverter board. The type of components on the inverter board can be modified as properly.

(4) In the above-described embodiments, two inverter boards are provided corresponding to the electrodes at the respective ends of the cold cathode tubes. One of the inverter boards is not necessarily provided. That is, the cold cathode tubes may be driven by one-side driving method, with one ends (the lower voltage side) connected to a ground circuit instead of the inverter board.

(5) In the above-described embodiments, the outer leads project from the ends of the glass tubes of the cold cathode tubes. The outer leads are connected to the connectors. The outer leads may be connected to the connectors via ferrules fitted on the ends of the glass tubes.

(6) In the above-described embodiments, the cold cathode tubes are used as the light source. The cold cathode tubes are a type of fluorescent lamps. Another type of fluorescent lamps (such as hot cathode tubes) may be used as the light source. Furthermore, the fluorescent lamps are a kind of discharge tubes. Another kind of discharge tubes (such as mercury lamps) may also be used as the light source.

### EXPLANATION OF SYMBOLS

- 10:: Liquid crystal display device (Display device)
- 11:: Liquid crystal panel (Display panel)
- 12:: Backlight unit (Lighting device)
- 18:: Cold cathode tube (Light source)
- 20:: Inverter board (Power supply board)
- 20c:: Connecting portion
- 20d:: Inner connecting portion
- 20e:: Outer connecting portion
- 20:: Rounded corner
- 21:: Relay connector (Connector)
- TV:: Television receiver

## Claims

1. A lighting device comprising:
a plurality of light sources;
a chassis housing the light sources, the chassis having a guide;
a power supply board disposed opposite from the light sources with respect to the chassis and configured to supply drive power to the light sources; and
a plurality of relay connectors mounted to the chassis and configured to relay power supply from the power supply board to the light sources, wherein
the relay connectors are arranged in a row;
the power supply board is disposed such that a long-side direction thereof is aligned with a direction along the row of the relay connectors;
the power supply board is moved in the direction along the row of the relay connectors so as to be connected to the relay connectors; and
the guide is configured to guide the power supply board in the direction along the row of the relay connectors.

2. The lighting device according to claim 1, wherein
the chassis is made of metal; and
the guide is formed by bending a part of the chassis in sheet-metal processing.

3. The lighting device according to claim 1, wherein
the guide is a separate member from the chassis.

4. The lighting device according to any one of claims 1 to 3, wherein
the guide comprises an end including a stopper that restricts movement of the power supply board.

5. The lighting device according to any one of claims 1 to 4, wherein
the guide is made of metal and is a ground of the power supply board for electrical discharge.

6. The lighting device according to any one of claims 1 to 5, wherein
the guide includes a first guide portion and a second guide portion;
the first guide portion guides the power supply board in in-plane directions of the chassis; and
the second guide portion holds the power supply board at a distance from the chassis.

7. A display device comprising:
the lighting device according to any one of claims 1 to 6; and
a display panel configured to perform display using light from the lighting device.

8. The display device according to claim 7, wherein
the display panel is a liquid crystal panel including two substrates and liquid crystals sealed therebetween.

9. A television receiver comprising the display device according to any one of claims 7 and 8.
